# FASCICULE DE BREVET EUROPEEN

(11) **EP 1 376 292 B1**
(45) Date de publication et mention de la délivrance du brevet: **28.12.2005**
(21) Numéro de dépôt: 03291485.5
(22) Date de dépôt: 18.06.2003
(51) Int. Cl.: G05D 23/13

(54) **Cartouche thermostatique monocommande, à disques en céramique**
Einarmige thermostatische Kartusche mit Keramikscheiben
Single-lever thermostatic cartridge with ceramic discs

(30) Priorité: 21.06.2002 FR 0207735
(43) Date de publication de la demande: 02.01.2004
(73) Titulaire: VERNET S.A., 91291 Arpajon Cédex (FR)
(72) Inventeur: Mace, Christian, 91810 Vert-le-Grand (FR); Chamot, Jean, 91290 Arpajon (FR)
(74) Mandataire: Jacobson, Claude

(56) Documents cités:
- WO-A-96/26475
- US-A- 5 494 077

## Description

La présente invention concerne une cartouche thermostatique monocommande, à disques en céramique, ainsi qu'un robinet mélangeur comportant une telle cartouche.

La plupart des robinets mélangeur à cartouche à disques en céramique équipant actuellement les éviers ou les lavabos ne permettent pas de stabiliser efficacement la température du fluide de sortie, dit fluide « mélangé » ou « mitigé », quand la pression et/ou la température de l'un au moins des fluides d'entrée, dit « fluide froid » et « fluide chaud », varient de manière importante et/ou brusque.

On a donc proposé par le passé des cartouches de ce type équipé d'un élément thermostatique pour réguler la température du fluide de sortie.

On connaît en particulier par le document WO-96/26475 une cartouche thermostatique monocommande permettant de constituer des robinets « mitigeurs », c'est-à-dire au moyen desquels les réglages du débit et de la température du fluide de sortie sont effectués en actionnant un organe unique, d'où le terme de « monocommande ». Ce type de cartouche assure le réglage du débit et de la température au moyen de deux disques en céramique superposés, le disque inférieur comportant deux passages de montée des fluides respectivement froid et chaud et deux passages de descente des fluides respectivement froid et chaud. La régulation thermostatique de la température du fluide mitigé de sortie est quand à elle assurée par un tiroir de régulation de température, situé en aval et au-dessous du disque inférieur, solidarisé à un élément thermostatique de régulation connu en soi.

Cependant, la géométrie de cette cartouche, en particulier la disposition relative des passages de montée et de descente des fluides froid et chaud, limite à la fois le diamètre disponible pour le tiroir de régulation et les sections de passage des fluides. Les débits des fluides à mitiger étant faibles, il en résulte un écoulement faible autour de l'élément thermostatique, d'où une mauvaise régulation en température, incompatible avec les normes en vigueur pour les robinets thermostatiques, ainsi qu'un faible débit de sortie, limitant la gamme des applications possibles.

Cet inconvénient est d'autant plus marqué lorsque cette cartouche est dimensionnée pour équiper des robinets mélangeurs de diamètre extérieur standardisé, de l'ordre de 46 mm, dans le but de remplacer une cartouche non-régulée par une cartouche à régulation thermostatique.

L'invention a pour but de remédier à ces inconvénients en proposant une cartouche thermostatique monocommande, qui assure une régulation de température plus efficace que celle obtenue par les cartouches connues, et ce dans une large plage de débit.

A cet effet, l'invention a pour objet une cartouche thermostatique monocommande, du type comportant un corps à l'intérieur duquel est ménagée une chambre de fluide mitigé ; un disque fixe par rapport audit corps, pourvu à la fois d'au moins un passage d'entrée et d'au moins un passage de retour de fluide froid, et d'au moins un passage d'entrée et d'au moins un passage de retour de fluide chaud ; un disque mobile par rapport au disque fixe, pourvu d'un passage de fluide froid adapté pour mettre en communication le passage d'entrée et le passage de sortie de fluide froid du disque fixe , et d'un passage de fluide chaud adapté pour mettre en communication le passage d'entrée et le passage de retour de fluide chaud du disque fixe ; des moyens de régulation thermostatique comportant un tiroir de régulation qui est disposé dans la chambre de fluide mitigé, en aval des passages de retour de fluides froid et chaud, et un élément thermostatique qui est situé au moins en partie à l'intérieur de la chambre de fluide mitigé et auquel est relié mécaniquement le tiroir de régulation; et un unique levier de commande du débit et de la température de fluide mitigé adapté à la fois pour entraîner en rotation et en translation le disque mobile par rapport au disque fixe, et pour déplacer l'élément thermostatique à l'intérieur de la chambre de fluide mitigé, dans laquelle les passages d'entrée et de retour de fluide froid du disque fixe s'étendent approximativement bout à bout en arcs de circonférences de rayons sensiblement égaux, et les passages d'entrée et de retour de fluide chaud du disque fixe s'étendent approximativement bout à bout en arcs de circonférences de rayons sensiblement égaux.

Suivant d'autres caractéristiques de cette cartouche, prises isolément ou selon toutes les combinaisons techniquement possibles :
- les rayons des arcs de circonférences pour les passages de fluide froid du disque fixe et les rayons des arcs de circonférence pour les passages de fluide chaud du disque fixe sont sensiblement égaux ;
- le disque fixe comporte, pour un même fluide froid ou chaud, plusieurs passages d'entrée séparés les uns des autres et/ou plusieurs passages de retour séparés les uns des autres ;
- pour un même fluide froid ou chaud, le ou les passages d'entrée et le ou les passages de retour forment une succession de passages alternés ;
- la cartouche comporte un écrou de commande de la température du fluide mitigé, lié en rotation au levier de commande et comprenant à la fois une bride annulaire en contact plan glissant avec le disque mobile et un corps cylindrique sur lequel est monté à basculement le levier de commande ;
- les moyens de régulation thermostatique comportent une vis de réglage de la température du fluide mitigé, fixe en rotation par rapport au corps et reçue dans un filetage sensiblement complémentaire porté par le corps de l'écrou de commande, l'élément thermostatique étant en appui contre ladite vis ;
- un ressort de surcourse est interposé entre le tiroir de régulation et l'élément thermostatique à l'intérieur de la chambre de fluide mitigé ;
- le ressort de surcourse est logé radialement à l'intérieur d'une couronne extérieure du tiroir de régulation ;
- la cartouche comporte un organe de génération de turbulences présentant une surface intérieure de forme irrégulière en vis-à-vis d'une partie thermosensible de l'élément thermostatique.

L'invention a également pour objet un robinet mélangeur d'une cartouche telle que définie ci-dessus, qui comporte une poignée de commande du débit et de la température du fluide mitigé, solidaire du levier de commande de la cartouche.

L'invention sera mieux comprise à la lecture de la description qui va suivre, donnée uniquement à titre d'exemple et faite en se référant aux dessins sur lesquels :
- la figure 1 est une coupe longitudinale schématique, suivant le plan I-I indiqué sur la figure 3, d'une cartouche thermostatique selon l'invention, pourvue d'une poignée de commande en position dite « débit nul » ;
- la figure 2 est une coupe analogue à la figure 1, suivant un plan II-II également indiqué sur la figure 3, la poignée de commande étant en position « débit nul » ;
- la figure 3 est une coupe selon un plan III-III indiqué sur la figure 1, d'un disque inférieur équipant la cartouche des figures 1 et 2 ;
- la figure 4 est une coupe selon un plan IV-IV indiqué sur la figure 1, d'un disque supérieur équipant la cartouche des figures 1 et 2, accompagné d'une représentation schématique de la poignée de commande de la figure 1 ;
- la figure 5 est une coupe longitudinale schématique de la cartouche de la figure 1, suivant un plan V-V indiqué sur cette figure ;
- la figure 6 est une coupe suivant le plan VI-VI indiqué sur la figure 5, à plus petite échelle que celle des figures précédentes ;
- la figure 7 est une vue analogue à la figure 6, un levier de commande de la cartouche étant basculé et ainsi en position dite « plein débit » ;
- les figures 8 et 9 sont des vues analogues aux figures 1 et 2, le levier de commande étant dans sa position « plein débit » de la figure 7 ; et
- les figures 10 à 12 sont des coupes schématiques suivant un plan C-C indiqué sur la figure 8, représentant la superposition des disques inférieur et supérieur des figures 3 et 4 et la poignée de commande, et correspondant respectivement à une sortie de fluide tiède, à une sortie de fluide essentiellement froid et à une sortie de fluide essentiellement chaud.

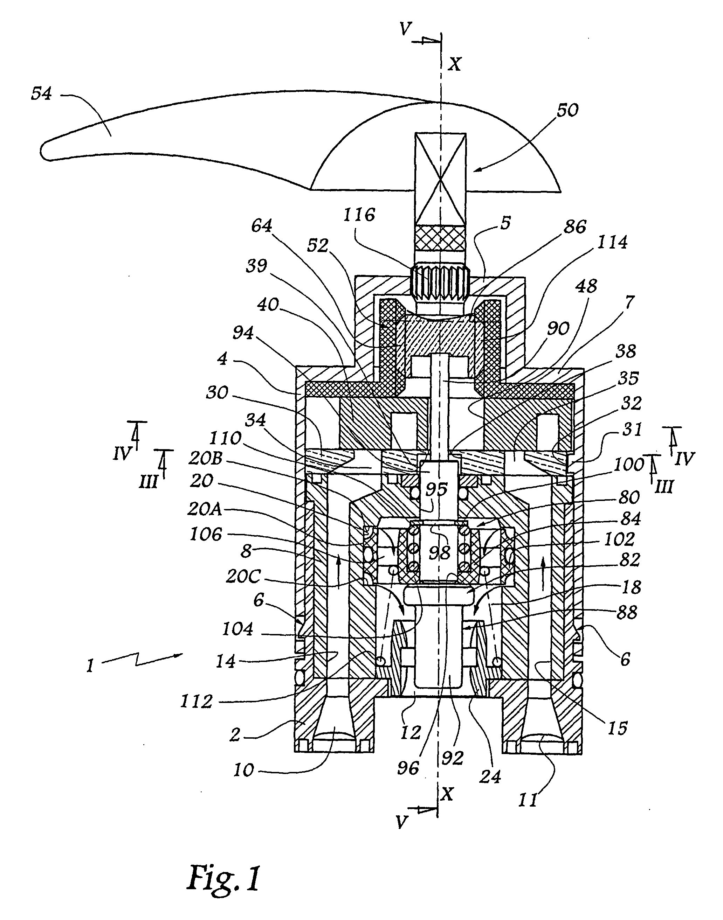

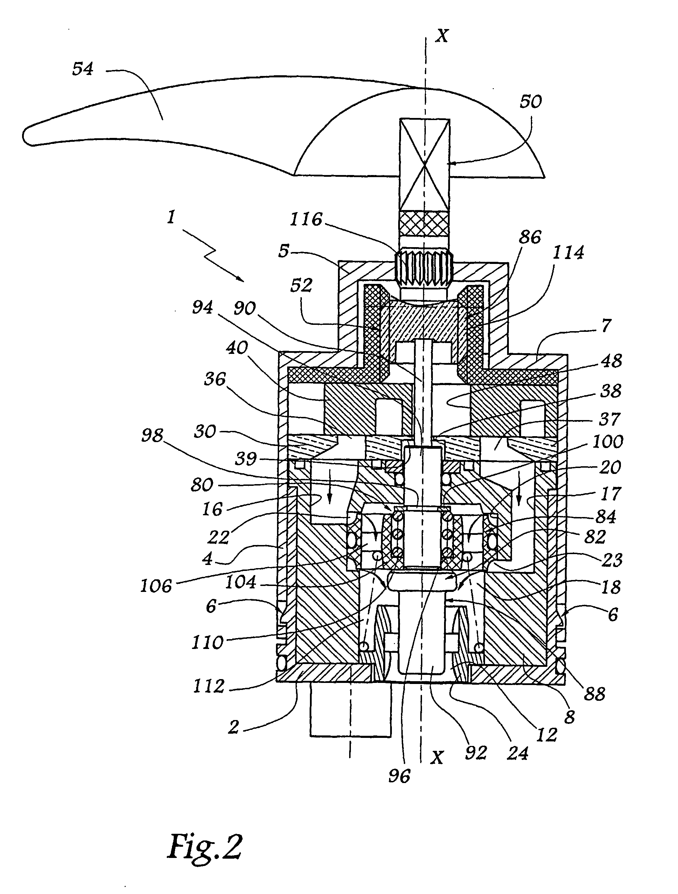

Sur les figures 1 et 2 est représentée une cartouche thermostatique 1, s'étendant longitudinalement suivant un axe central X-X, et destiné à équiper un robinet mélangeur d'eau. La suite de la description sera orientée en considérant que la partie basse de la cartouche est celle représentée en partie basse de la figure 1.

La cartouche 1 comporte un boîtier inférieur 2 de révolution autour de l'axe X-X, et un capot supérieur 4 également de révolution autour de l'axe X-X et adapté pour être positionné de façon co-axiale au boîtier 2, en étant solidarisé à ce dernier par des ensembles de clipsage 6.

A l'intérieur du boîtier 2 et du capot 4 est logé un corps de cartouche 8, de forme générale cylindrique d'axe X-X. Le corps 8 et le boîtier 2 sont fixes l'un par rapport à l'autre.

Dans sa partie inférieure, le boîtier 2 forme un passage traversant excentré d'entrée d'eau froide 10 et un passage traversant excentré d'entrée d'eau chaude 11, ces passages 10 et 11 s'étendant sensiblement parallèlement à l'axe X-X. Le boîtier 2 forme également dans sa partie inférieure un passage central de sortie d'eau mitigé 12.

En regard des passages 10 et 11 sont ménagés, dans le corps 8, un conduit d'entrée d'eau froide 14 et un conduit d'entrée d'eau chaude 15 (figure 1) qui s'étendent parallèlement à l'axe X-X. Comme représenté sur la figure 2, des conduits de retour d'eau froide 16 et d'eau chaude 17 sont également ménagés dans le corps de cartouche 8. Les distances radiales entre l'axe X-X et les conduits d'entrée 14, 15 et de retour 16, 17 sont sensiblement égales, ces conduits d'entrée et de sortie étant, dans un plan perpendiculaire à l'axe X-X, décalés angulairement les uns des autres pour ne pas communiquer directement entre eux.

Une chambre de mélange centrale 18 est délimitée à l'intérieur du corps 8. Dans la partie supérieure de cette chambre 18 est ménagée une gorge annulaire 20, co-axiale à l'axe X-X. Le conduit de retour d'eau froide 16 (figure 2) communique avec la chambre 18 via un passage de retour d'eau froide 22 débouchant dans la partie haute de la gorge 20. De la même façon, le conduit de retour d'eau chaude 17 (figure 2) communique avec la chambre 18 via un passage de retour d'eau chaude 23 débouchant dans la partie basse de la gorge 20.

La chambre de mélange 18 communique dans sa partie inférieure avec le passage de sortie 12, via un organe annulaire de génération de turbulences 24, couramment appelé « turbulateur ». Ce turbulateur présente une surface intérieure de forme irrégulière pour assurer l'homogénéité en température de l'écoulement de sortie de la cartouche 1.

Pour permettre aux conduits d'entrée 14 et 15 de communiquer avec les conduits de retour 16 et 17, la cartouche 1 comporte deux disques superposés en céramique, à savoir un disque inférieur 30 et un disque supérieur 40 détaillé plus loin.

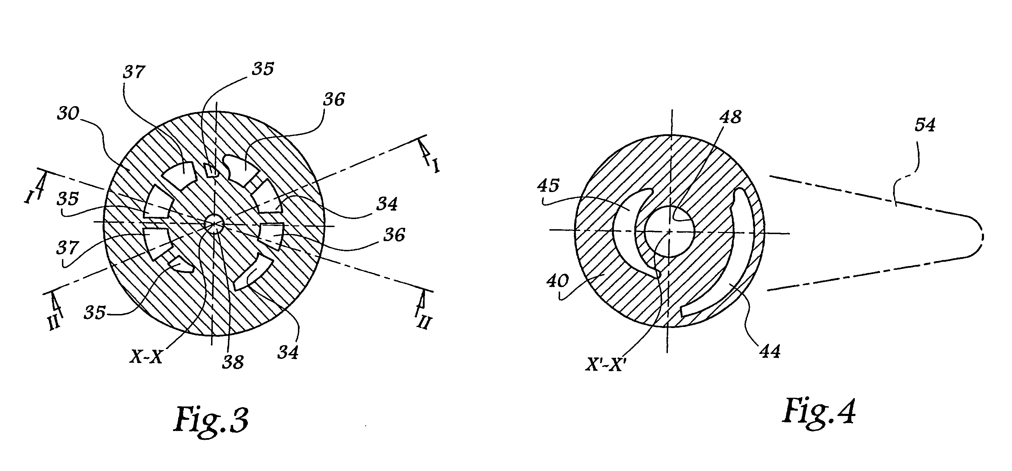

Le disque inférieur 30 est monté sur le corps de cartouche 8, de manière co-axiale à l'axe X-X et est fixe par rapport à celui-ci. A cet effet, il est retenu par le capot 4 à la fois en translation, son diamètre extérieur étant sensiblement égal au diamètre intérieur du capot, et en rotation, par exemple au moyen de saillies radiales 31, tournées vers l'intérieur du capot 4 et solidaires de ce capot, reçues dans des encoches 32 correspondantes ménagées à la périphérie du disque 30. Un ensemble saillie/encoche est visible sur la figure 1. Le disque fixe 30 comporte par ailleurs une série de passages internes traversants, représentés en détail sur la figure 3.

Plus précisément, ce disque 30 comporte deux passages d'entrée d'eau froide 34, trois passages d'entrée d'eau chaude 35, deux passages de retour d'eau froide 36 et deux passages de retour d'eau chaude 37.

Les passages d'entrée d'eau froide 34 sont raccordés au conduit d'entrée d'eau froide 14, ce dernier se ramifiant en deux branches dans sa partie supérieure, dont une seule est visible sur la figure 1, de façon à ce que l'eau froide montante alimente à la fois les deux passages 34. De la même façon, les passages d'entrée d'eau chaude 35 sont raccordés au conduit d'entrée d'eau chaude 15, ce dernier étant ramifié dans sa partie supérieure en trois branches, dont une seule est visible sur la figure 1, qui communiquent chacune avec l'un des trois passages 35.

Les passages de retour d'eau froide 36 communiquent quant à eux avec les conduits de retour d'eau froide 16, et les passages de retour d'eau chaude 37 communiquent avec les conduits de retour d'eau chaude 17.

Les passages 34 à 37 s'étendent dans le disque 30 en arcs de circonférences centrés sur l'axe central X-X, les rayons, tant intérieurs qu'extérieurs, de ces passages étant approximativement égaux. De plus, les passages d'eau froide 34 et 36 sont disposés approximativement bout à bout à faible distance les uns des autres, en alternant passage d'entrée 34/passage de sortie 36 et s'étendent sur une portion de circonférence globale inférieure à 180°. De la même façon, les passages d'eau chaude 35 et 37 sont disposés approximativement bout à bout, à faible distance les uns des autres, en alternant passage d'entrée 35/passage de sortie 37, et s'étendent sur une portion de circonférence globale inférieure à 180°, à peu près opposée à la portion de circonférence des passages d'eau froide 34 et 36.

Le disque inférieur 30 comporte également un trou central axial 38 traversant le disque de part en part. Comme représenté sur les figures 1 et 2, ce trou 38 est étagé en formant un épaulement intermédiaire 39.

Le disque supérieur 40, d'axe X'-X', représenté plus en détail sur la figure 4, est monté sur le disque inférieur 30. Il est mobile par rapport au disque fixe 30, à la fois en rotation autour de l'axe central X-X de la cartouche et en translation dans un plan parallèle au disque 30, le diamètre du disque 40 étant plus petit que celui du disque 30.

Des moyens d'entraînement du disque mobile 40 sont détaillés dans ce qui suit.

Le disque 40 comporte deux passages internes de fluide, à savoir un passage d'eau froide 44 et un passage d'eau chaude 45. Ces passages 44 et 45 s'étendent en arcs de circonférences centrés sur l'axe central X'-X' du disque 40. Les passages 44 et 45 ne débouchent pas sur la face supérieure du disque 40 de sorte qu'ils forment des chambres de circulation d'eau qui s'étendent respectivement sur un peu moins de deux demi-circonférences du disque, opposées l'une à l'autre.

Selon la position angulaire relative du disque mobile 40 par rapport au disque fixe 30, d'une part le passage d'eau froide 44 met en communication au moins l'un des passages d'entrée d'eau froide 34 et au moins l'un des passages de retour d'eau froide 36, et d'autre part le passage d'eau chaude 45 met en relation au moins l'un des passages d'entrée d'eau chaude 35 avec au moins l'un des passages de retour d'eau chaude 37, comme il sera explicité plus en détail lors de la description du fonctionnement de la cartouche 1.

Le disque 40 comporte également un trou central axial 48, traversant de part en part le disque.

Les moyens d'entraînement du disque mobile 40 par rapport au disque fixe 30 comportent essentiellement un levier de commande 50 et un écrou de commande 52 réalisé par exemple en matériau synthétique. Une poignée d'actionnement 54 est rapportée sur le levier 50 dont le corps en forme d'étrier comprend deux branches 58 parallèles l'une à l'autre et s'étendant parallèlement à l'axe X-X. Les branches 58 se prolongent vers le bas jusqu'à l'intérieur de la cartouche 1, en traversant des ouvertures 60 ménagées dans l'épaulement 7 du capot 4, en forme générale d'arcs de cercles centrés sur l'axe X-X.

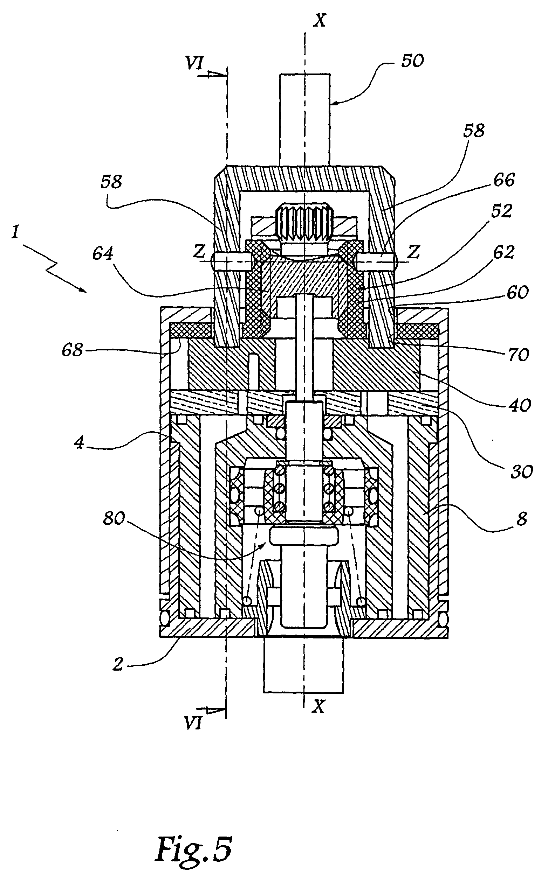

Comme représenté sur la figure 5, l'écrou 52 comporte un corps cylindrique 62, sensiblement co-axial à l'axe X-X et présentant intérieurement un filetage 64. Ce corps 62 est pourvu solidairement de deux pions 66, symétriques par rapport à l'axe X-X et disposés en saillie vers l'extérieur du corps 62 suivant une direction sensiblement perpendiculaire à l'axe X-X jusqu'à rejoindre les branches 58 du levier de commande 50. Les pions 66 forment de la sorte un axe Z-Z de basculement du levier 50.

L'écrou de commande 52 comporte en outre une bride annulaire 68, venu de matière avec le corps 62, et s'étendant sensiblement perpendiculairement à ce dernier. La bride 68, de diamètre extérieur sensiblement égal au diamètre intérieur du capot 4, est interposée, en formant un calage axial, entre l'épaulement 7 du capot et la face supérieure du disque mobile 40. La bride 68 est de la sorte en appui plan glissant sur le disque 40 et sur le capot 4, l'intensité de frottement entre ces éléments étant sensiblement nulle.

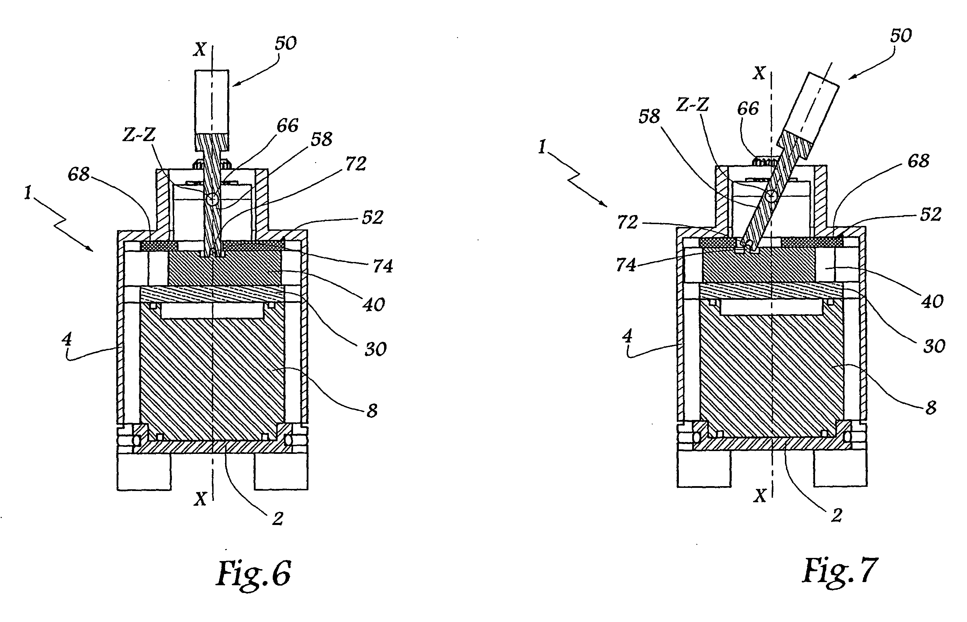

La bride 68 est pourvue de deux ouverture 70 qui s'étendent perpendiculairement à l'axe Z-Z, en regard des ouvertures 60 ménagées dans l'épaulement 7, et à l'intérieur de chacune desquelles est reçue l'extrémité libre des branches 58 du levier de commande 50. Comme représenté plus en détail sur la figure 7, l'extrémité de ces branches présente une encoche 72 de forme sensiblement complémentaire d'un téton 74 dont est pourvue la face supérieure du disque 40.

De la sorte, le disque mobile 40 est adapté pour être commandé uniquement par le levier 50 : lorsque le levier 50 est basculé autour de l'axe Z-Z, les encoches 72 des branches 58 sont à même d'entraîner le disque 40 en translation dans un plan sensiblement perpendiculaire à l'axe X-X, suivant une direction perpendiculaire à l'axe de basculement Z-Z ; lorsque le levier de commande 50 est entraîné en rotation autour de l'axe X-X, les branches 58 entraînent en rotation le disque 40 par l'intermédiaire des encoches 72 et des tétons 74.

La cartouche 1 comporte également des moyens 80 de régulation thermostatique. En revenant aux figures 1 et 2, ces moyens 80 comportent essentiellement un élément thermostatique 82, un tiroir de régulation 84 relié mécaniquement à l'élément thermostatique 82, et une vis de réglage 86 reliée également mécaniquement à l'élément thermostatique 82.

L'élément thermostatique 82, connu en soi, comporte un corps 88 de forme allongée et s'étendant de façon co-axiale à l'axe X-X, et une tige 90 s'étendant dans le prolongement du corps 88, le corps et la tige étant mobiles l'un par rapport à l'autre en translation suivant une direction parallèle à l'axe X-X.

Le corps 88 de l'élément thermostatique 82 comporte une partie thermosensible 92 contenant une quantité prédéterminée de cire dilatable. Cette partie thermosensible 92 est située à l'intérieur de la chambre de mélange 18, le turbulateur 24 s'étendant autour et à distance d'elle. Le turbulateur 24 favorise l'échange thermique entre l'eau mélangée et la partie thermosensible 92.

Le corps 88 de l'élément 82 comporte également une douille 94 adaptée pour loger au moins en partie la tige 90 lors de la translation relative du corps 88 et de la tige 90. La partie supérieure de cette douille est reçue de manière étanche dans une ouverture traversante 95 ménagée dans la région du corps de cartouche 8 formant le plafond de la chambre 18, débouchant dans le trou central 38 du disque fixe 30. La partie du trou 38 de plus grand diamètre forme un dégagement ménagé dans le disque 30 pour laisser l'élément thermostatique libre de mouvement.

La douille 94 étant de diamètre extérieur plus petit que le diamètre maximale de la partie thermosensible 92, un épaulement 96 est formé au niveau du raccordement entre la douille et la partie thermosensible. De plus, une rainure annulaire 98 est ménagée dans la partie courante de la douille 94, cette rainure 98 recevant une rondelle rigide 100, par exemple sous la forme d'un anneau métallique fendu.

La tige 90 de l'élément thermostatique 82 est disposée à la fois à l'intérieur du trou 38, son diamètre extérieur étant inférieur au diamètre minimal du trou 38, et à l'intérieur du trou central 48 du disque mobile 40. La tige 90 s'étend de la sorte jusqu'à la vis de réglage 86, l'extrémité supérieure de la tige étant en appui sur la face inférieure de la vis.

Le tiroir de régulation 84, de forme générale cylindrique d'axe X-X, s'étend à l'intérieur de la chambre de mélange 18. Il comporte une couronne extérieure 102 dont le pourtour extérieur coopère avec la gorge annulaire 20 de façon à réguler la quantité d'eau chaude et d'eau froide parvenant à la chambre 18. Plus précisément, la couronne 102 est montée en contact glissant sur la paroi de fond 20A de la gorge 20, c'est-à-dire la paroi radialement la plus à l'extérieur des parois délimitant cette gorge. La paroi latérale supérieure 20B de la gorge 20 forme un siège de régulation d'eau froide pour la couronne 102 du tiroir 84, et la paroi latérale 20C forme un siège de régulation d'eau chaude pour cette couronne.

Le tiroir 84 comporte également une couronne intérieure 104, reliée rigidement à la couronne extérieure 102 par des rayons 106, et épaulée vers l'intérieur en partie basse de façon à former une coupelle de réception d'un ressort cylindrique 110, dit ressort de surcourse pour une raison expliquée plus loin, et disposé suivant sa longueur axiale entre la partie épaulée de la couronne 102 et la rondelle d'arrêt 100. Le ressort 110 est ainsi situé en totalité radialement à l'intérieur de la couronne 102.

Le tiroir de régulation 84 est ainsi mécaniquement relié à la fois au corps 88 de l'élément thermostatique 82, d'une part en prenant appui par sa couronne intérieure 104 sur l'épaulement 96 et, d'autre part, au moyen du ressort cylindrique 102, et au corps de cartouche 8 au moyen d'un ressort de rappel 112 de forme tronconique et disposé entre le turbulateur 24 et les rayons 106 du tiroir. De la sorte, le ressort 112 maintient le turbulateur en appui contre un épaulement du boîtier 2 délimitant le passage de sortie 12, tout en assurant la charge nécessaire au bon fonctionnement de l'élément thermostatique 82 par l'intermédiaire du tiroir 84.

La vis de réglage 86 est pourvue d'un filetage extérieur 114 en prise avec le filetage 64 de l'écrou de commande 52. Elle comporte une tête 116 présentant une surface extérieure cannelée en prise avec des cannelures correspondantes ménagées dans la tête 5 du capot 4. La vis 86 est de la sorte bloquée en rotation par rapport au capot 4. De plus, lorsque le levier de commande 50 est entraîné en rotation autour de l'axe X-X, les branches 58 entraînent, par l'intermédiaire des pions 66, l'écrou de commande 52 qui provoque la translation de la vis 86 par l'intermédiaire des filetages 64 et 114.

Le fonctionnement de la cartouche thermostatique 1 est le suivant :

L'eau froide entre dans la cartouche par le passage 10 du boîtier 2, monte par le conduit 14 du corps 8, empreinte au moins l'un des passages 34, circule dans le passage 44, descend par au moins l'un des passages de retour 36 du disque 30 puis par le ou les conduits de retour 16 correspondants, et parvient dans la chambre de mélange 18 si le tiroir de régulation 84 n'est pas en appui sur son siège formé par la paroi 20C de la gorge 20. Simultanément, l'eau chaude entre dans la cartouche 1 par le passage 11, monte par le conduit 15, empreinte au moins l'un des passages 35 du disque 30, circule dans le passage 45 du disque 40, descend par au moins l'un des passages 37 du disque 30, empreinte le ou les conduits de retour 17 correspondants et se repend à l'intérieur de la chambre 18 via le passage 23 si le tiroir 84 n'est pas en appui contre son siège formé par la paroi 20B de la gorge 20.

A la base du tiroir 84, l'eau chaude et l'eau froide commencent à se mélanger, le mélange se poursuivant autour de la partie thermosensible 92 de l'élément thermostatique 82 et à l'intérieur du turbulateur 24 inséré dans le passage de sortie 12 par lequel l'eau mélangée est évacuée.

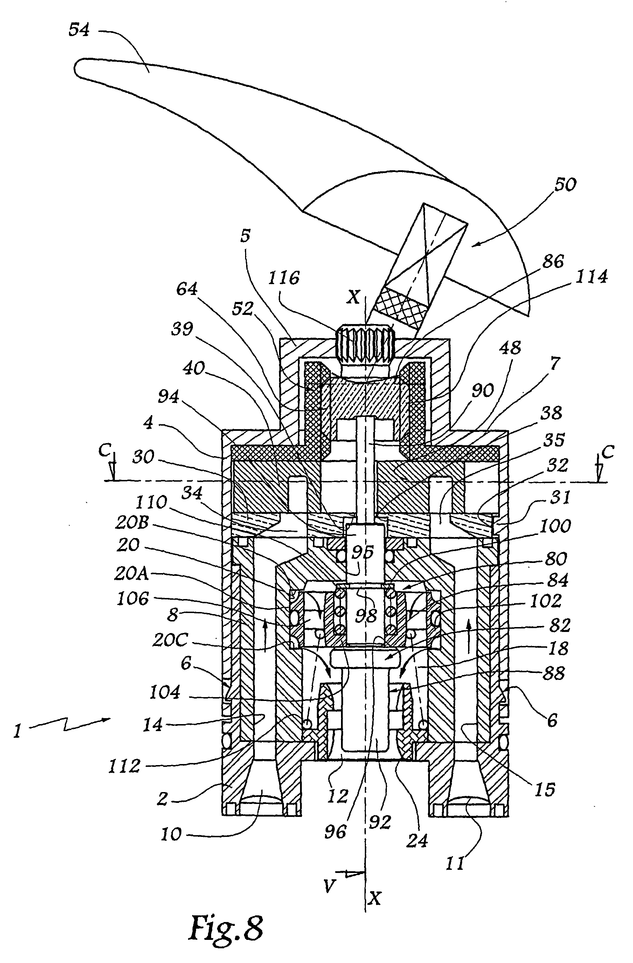

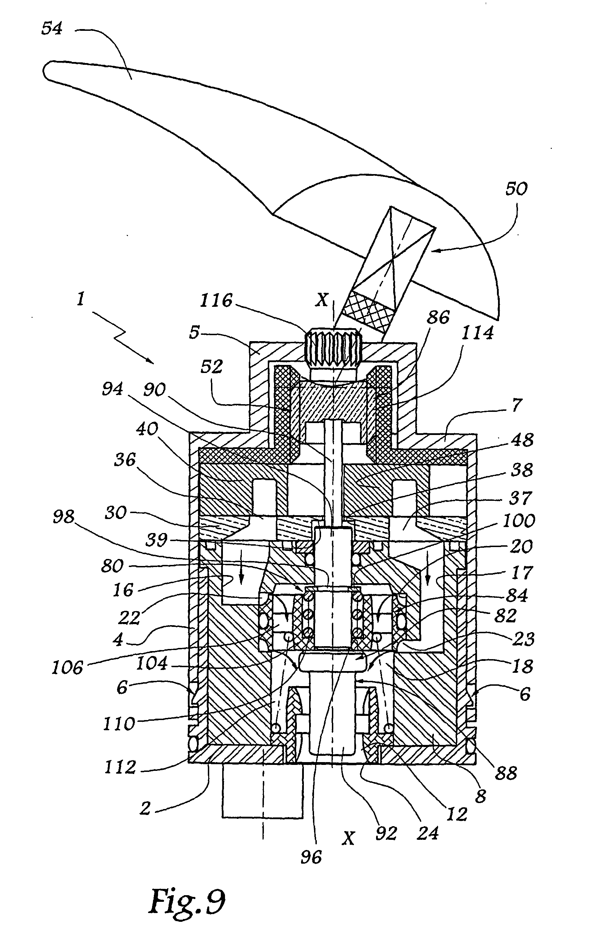

Le réglage du débit de l'eau mitigée est obtenu par un basculement du levier de commande 50 autour de l'axe Z-Z défini par les pions 66, provoquant la translation suivant un plan perpendiculaire à l'axe X-X du disque mobile 40 par rapport au disque fixe 30. La section d'écoulement pour l'eau chaude et l'eau froide résultant de la superposition des deux disques est plus ou moins étendue, ces sections d'écoulement variant de la fermeture totale à une ouverture maximale, et inversement. Par exemple, lorsque le levier de commande est tel que représenté sur la figure 7, c'est-à-dire pour un débit considéré comme maximal, la cartouche thermostatique 1 est telle que représentée sur les figures 8 à 12.

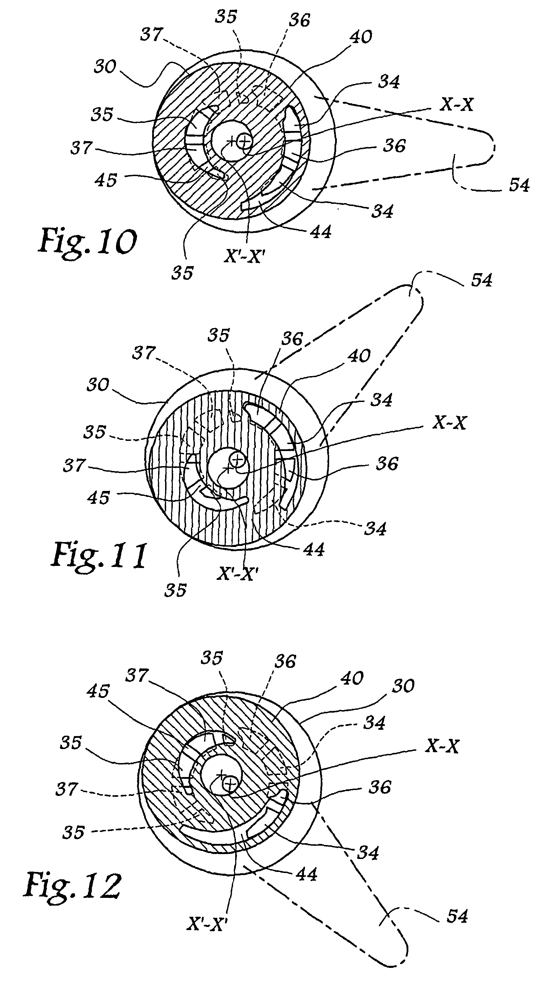

Le réglage de la température de l'eau mitigée est quant à lui obtenu par la rotation du levier de commande 50 autour de l'axe X-X. Cette rotation entraîne la rotation du disque mobile 40 par rapport au disque fixe 30, et ce quelle que soit la position en basculement du levier 50. Les sections d'écoulement pour l'eau chaude et pour l'eau froide résultant de la superposition des deux disques sont alors plus ou moins étendues l'une par rapport à l'autre, la forme des passages 34 à 37, 44 et 45 étant adaptés pour que, lorsque la poignée 54 solidaire du levier 50 est entraîné vers le haut sur les figures 10 à 12 (c'est-à-dire vers la droite lorsque la poignée pointe vers l'utilisateur), la section d'écoulement de l'eau froide soit nettement plus importante que celle de l'eau chaude (figure 11), et inversement lorsque la poignée du levier de commande est entraîné vers la position (figure 12). Lorsque la poignée 54 occupe une position médiane entre ses positions extrêmes de gauche et de droite, les sections d'écoulement de l'eau froide et de l'eau chaude sont sensiblement égales, l'eau mitigée étant alors tiède (figure 10). Le fonctionnement qui vient d'être décrit est sensiblement analogue à celui des cartouches de mitigeur dépourvus de moyens de régulation thermostatique.

A position fixe en rotation du levier 50 par rapport au reste de la cartouche 1, les moyens de régulation thermostatique 80 fonctionnent de la façon suivante : si la température de l'eau mélangée dans la chambre 18 augmente, par exemple en raison d'une baisse de la pression d'alimentation en eau froide, la partie thermosensible 92 de l'élément thermostatique 82 transmet un supplément de chaleur à la cire dilatable qu'elle contient de sorte que une force de poussée supplémentaire entre le corps 88 de l'élément thermostatique et sa tige 90 est générée. La tige 90 étant en appui contre la vis 86, retenue axialement par l'écrou de commande 52, l'élément thermostatique 80 s'allonge, son corps 88 s'éloignant de la tige 90. Le tiroir de régulation 84 qui est lié à l'élément thermostatique 82 réduit alors l'espace que le sépare de son siège formé par la paroi 20C de la gorge 20, ce qui diminue la section d'écoulement de l'eau chaude et augmente la section de l'écoulement de l'eau froide. Il en résulte une diminution de la température de l'eau mélangée. Quand la température de l'eau mélangée diminue, le fonctionnement des moyens de régulation thermostatique 80 est inverse. Les corrections de la température de l'eau mélangée par les moyens 80 s'équilibrent jusqu'à la stabilisation de la température à une valeur préétablie qui dépend de l'altitude à laquelle culmine la tige 90 de l'élément thermostatique 82.

Ainsi, lorsque cette fois-ci le levier de commande est entraîné en rotation autour de l'axe X-X, en plus du mouvement du disque 40 décrit plus haut, la rotation de l'écrou de commande 52 entraîne la vis de réglage 86 suivant un mouvement de translation selon une direction parallèle à l'axe X-X, la vis 86 étant fixe en rotation par rapport au capot 4 par les cannelures de sa tête 116. L'ensemble de l'élément thermostatique 82 subit alors le même mouvement de translation, le corps 88 de l'élément thermostatique 82 ayant tendance à se déplacer en translation suivant un sens inverse en raison de la correction par le tiroir de régulation 84 de la température de l'eau mitigée, suivant le principe vu ci-dessus. Le pas des filetages 64 et 114 est adapté pour autoriser à la fois le réglage de la température de l'eau mitigé par la poignée de commande 54 et la marche des corrections de température par les moyens de régulation thermostatique 80 de façon à imposer à l'eau mitigée une température souhaitée, repérée par exemple par une bague graduée rapportée sur la face extérieure du capot 4. En d'autres termes, l'altitude à laquelle culmine la tige 90 de l'élément thermostatique est directement imposée par la position en rotation de la poignée 54 par rapport à la cartouche 1. Pour limiter la température de réglage à une valeur maximale (par exemple 50 ou 55°C au point de « puisage »), un dispositif de butée est avantageusement prévu, par exemple sous la forme d'une butée axiale pour la vis de réglage ou par des butées entre l'écrou de commande 52 et une bague graduée rapportée sur la face extérieure du capot 4. De la sorte la poignée 54 est déplaçable en rotation entre deux positions extrêmes (froid et chaud) décalées angulairement de sensiblement 90°.

En outre, s'il survient une coupure d'eau froide, l'élément thermostatique 82 n'est sensibilisé que par de l'eau chaude, la tige 90 s'étend de manière importante, le tiroir de régulation 84 se déplace par rapport au corps 8 jusqu'à arrivé en contact contre son siège formé par la paroi 20C de la gorge 20, la rondelle 100 comprimant alors le ressort 110 sur une surcourse correspondante. Il en résulte une fermeture automatique de l'eau chaude, évitant ainsi tout risque de brûlure, ce qui confère à la cartouche 1 une fonction de sécurité anti-brûlure.

La disposition des passages d'entrée et de retour des fluides froid et chaud du disque fixe 30 sur des arcs de circonférences de sensiblement même rayon permettent de disposer d'une chambre de mélange 18 de diamètre intérieur important, la dimension du tiroir de régulation 84 étant alors plus importante que pour des cartouches thermostatiques relevant de l'art antérieur. De ce fait, pour un même débit, la régulation thermostatique de cette cartouche est plus efficace, tout en permettant son fonctionnement par un unique levier.

De plus, le volume important disponible de la chambre de mélange 18 permet d'y placer les ressorts de surcourse 110 et de rappel 112, évitant ainsi de les placer à l'extérieur (généralement au-dessus) du corps de cartouche 8. L'encombrement global de la cartouche selon l'invention s'en trouve notablement réduit.

Divers variantes et aménagements, à la portée de l'homme du métier, du mode de réalisation décrit ci-dessus sont envisageables.

## Revendications

1. Cartouche thermostatique monocommande, du type comportant un corps (8) à l'intérieur duquel est ménagée une chambre (18) de fluide mitigé ; un disque (30) fixe par rapport audit corps (8), pourvu à la fois d'au moins un passage d'entrée (34) et d'au moins un passage de retour (36) de fluide froid, et d'au moins un passage d'entrée (35) et d'au moins un passage de retour (37) de fluide chaud ; un disque (40) mobile par rapport au disque fixe (30), pourvu d'un passage (44) de fluide froid adapté pour mettre en communication le passage d'entrée et le passage de sortie de fluide froid du disque fixe (30), et d'un passage (45) de fluide chaud adapté pour mettre en communication le passage d'entrée (35) et le passage de retour (37) de fluide chaud du disque fixe (30) ; des moyens (80) de régulation thermostatique comportant un tiroir de régulation (84) qui est disposé dans la chambre de fluide mitigé (18), en aval des passages de retour (16, 17) de fluides froid et chaud, et un élément thermostatique (82) qui est situé au moins en partie à l'intérieur de la chambre de fluide mitigé (18) et auquel est relié mécaniquement le tiroir de régulation (84) ; et un unique levier (50) de commande du débit et de la température de fluide mitigé adapté à la fois pour entraîner en rotation et en translation le disque mobile (40) par rapport au disque fixe (30), et pour déplacer l'élément thermostatique à l'intérieur de la chambre de fluide mitigé (18), **caractérisée en ce que** les passages d'entrée (34) et de retour (36) de fluide froid du disque fixe (30) s'étendent approximativement bout à bout en arcs de circonférences de rayons sensiblement égaux et **en ce que** les passages d'entrée (35) et de retour (37) de fluide chaud du disque fixe (30) s'étendent approximativement bout à bout en arcs de circonférences de rayons sensiblement égaux.

2. Cartouche selon la revendication 1, **caractérisée en ce que** les rayons des arcs de circonférences pour les passages (34, 36) de fluide froid du disque fixe (30) et les rayons des arcs de circonférence pour les passages (35 et 37) de fluide chaud du disque fixe (30) sont sensiblement égaux.

3. Cartouche selon la revendication 1 ou 2, **caractérisée en ce que** le disque fixe (30) comporte, pour un même fluide froid ou chaud, plusieurs passages d'entrée (34, 35) séparés les uns des autres et/ou plusieurs passages de retour (36, 37) séparés les uns des autres.

4. Cartouche selon la revendication 3, **caractérisée en ce que**, pour un même fluide froid ou chaud, le ou les passages d'entrée (34, 35) et le ou les passages de retour (36, 37) forment une succession de passages alternés.

5. Cartouche selon l'une quelconque des revendications précédentes, **caractérisée en ce qu'**elle comporte un écrou (52) de commande de la température du fluide mitigé, lié en rotation au levier de commande (50), et comprenant à la fois une bride annulaire (68) en contact plan glissant avec le disque mobile (40) et un corps cylindrique (62) sur lequel est monté à basculement le levier de commande.

6. Cartouche selon la revendication 5, **caractérisée en ce que** les moyens de régulation thermostatique (80) comportent une vis (86) de réglage de la température du fluide mitigé, fixe en rotation par rapport au corps (8) et reçue dans un filetage sensiblement complémentaire porté par le corps (62) de l'écrou de commande (52), l'élément thermostatique (82) étant en appui contre ladite vis (86).

7. Cartouche selon l'une quelconque des revendications précédentes, **caractérisée en ce qu'**un ressort de surcourse (110) est interposé entre le tiroir de régulation (84) et l'élément thermostatique (82) à l'intérieur de la chambre de fluide mitigé (18).

8. Cartouche selon la revendication 7, **caractérisée en ce que** le ressort de surcourse (110) est logé radialement à l'intérieur d'une couronne extérieure (102) du tiroir de régulation (84).

9. Cartouche selon l'une quelconque des revendications précédentes, **caractérisée en ce qu'**elle comporte un organe de génération de turbulences (24) présentant une surface intérieure de forme irrégulière en vis-à-vis d'une partie thermosensible (92) de l'élément thermostatique (82).

10. Robinet mélangeur d'une cartouche selon l'une quelconque des revendications précédentes, **caractérisé en ce qu'**il comporte une poignée (54) de commande du débit et de la température du fluide mitigé, solidaire du levier de commande (50) de la cartouche (1).

## Patentansprüche

1. Einhebelthermastatkartusche des Typs, der einen Körper (8) aufweist, in dessen Innerem eine Kammer (18) für gemischtes Fluid ausgebildet ist, eine relativ zum genannten Körper (8) feststehende Scheibe (30), die gleichzeitig mit mindestens einer Einlassöffnung (34) und mit mindestens einer Rückflussöffnung (36) für kaltes Fluid versehen ist und mit mindestens einer Einlassöffnung (35) und mit mindestens einer Rückflussöffnung (37) für heißes Fluid, eine relativ zur festen Scheibe (30) bewegliche Scheibe (40), versehen mit einer Durchlassöffnung (44) für kaltes Fluid, dafür eingerichtet, die Einlassöffnung und die Auslassöffnung für kaltes Fluid der feststehenden Scheibe (30) miteinander zu verbinden, und mit einer Durchlassöffnung (45) für heißes Fluid, dafür eingerichtet, die Einlassöffnung (35) und die Rückflussöffnung (37) für heißes Fluid der feststehenden Scheibe (30) miteinander zu verbinden, Mittel (80) zur thermostatischen Regulierung, einen Regulierschieber (84) umfassend, der in der Kammer für gemischtes Fluid (18) hinter den Rückflussöffnungen (16, 17) für kaltes bzw. heißes Fluid angeordnet ist, und ein Thermostatelement (82), das sich mindestens teilweise innerhalb der Kammer für gemischtes Fluid (18) befindet und mit dem der Regulierschieber (84) mechanisch verbunden ist, und einen einzigen Betätigutigshebei (50) zur Einstellung von Durchftussmenge und Temperatur des gemischten Fluids, dafür eingerichtet, gleichzeitig die bewegliche Scheibe (40) relativ zur feststehenden Scheibe (30) zu drehen und zu verschieben und das Thermostatelement innerhalb der Kammer für gemischtes Fluid (18) zu verschieben, **dadurch gekennzeichnet, dass** die Einlassöffnung (34) und die Rückflussöffnung (36) für kaltes fluid der feststehenden Scheibe (30) ungefähr aneinander anschließend in Bögen mit im Wesentlichen gleichem Radius in Umfangsrichtung verlaufen und **dadurch**, dass die Einlassöffnung (35) und die Rückflussöffnung (37) für heißes Fluid der feststehenden Scheibe (30) ungefähr aneinander anschließend in Bögen mit im Wesentlichen gleichem Radius in Umfangsrichtung verlaufen.

2. Kartusche nach Patentanspruch 1, **dadurch gekennzeichnet, dass** die Radien der Bögen in Umfangsrichtung für die Durchlassöffnungen (34, 36) für kaltes Fluid der feststehenden Scheibe (30) und die Radien der Bögen in Umfangsrichtung für die DurchlassÖffnungen (35 und 37) für heißes Fluid der feststehenden Scheibe (30) im Wesentlichen gleich sind.

3. Kartusche nach Patentanspruch 1 oder 2, **dadurch gekennzeichnet, dass** die feststehende Scheibe (30) für das kalte bzw. für das heiße Fluid jeweils mehrere voneinander getrennte Einlassöffnungen (34, 35) und/oder mehrere voneinander getrennte Rückflussöffnungen (36, 37) aufweist.

4. Kartusche nach Patentanspruch 3, **dadurch gekennzeichnet, dass** die Einlassoffnung(en) (34, 35) und die Rückflussöffnung(en) (36, 37) für das kalte bzw. für das heiße Fluid eine Folge miteinander abwechselnder Durchlassöffnungen bilden.

5. Kartusche nach irgendeinem der vorangehenden Patentansprüche, **dadurch gekennzeichnet, dass** sie eine Betätigungsmutter (52) zur Einstellung der Temperatur des gemischten Fluids aufweist, die drehstarr mit dem Betätigungshebel (50) verbunden ist und gleichzeitig einen. Ringflansch (68) in eben gleitendem Kontakt mit der beweglichen Scheibe (40) und einen zylindrischen Körper (62) umfassend, auf dem der Betätigungshebel kippbar montiert ist.

6. Kartusche nach Patentanspruch 5, **dadurch gekennzeichnet, dass** die Mittel zur thermostatischen Regulierung (80) eine Schraube (86) zur Einstellung der Temperatur des gemischten Fluids umfassen, die relativ zum Körper (8) drehstarr ist und von einem im Wesentlichen komplementären Gewinde aufgenommen wird, das der Körper (62) der Betätigungsmutter (52) trägt, wobei das Thermostatelement (82) an der genannten Schraube (86) anliegt.

7. Kartusche nach irgendeinem der vorangehenden Patentansprüche, **dadurch gekennzeichnet, dass** eine Rückstellfeder (110) innerhalb der Kammer für gemischtes Fluid (18) zwischen dem Regulierschieber (84) und dem Thermostatelement (82) eingesetzt ist.

8. Kartusche nach Patentanspruch 7, **dadurch gekennzeichnet, dass** die Rückstellfeder (110) radial im inneren einer äußeren Kappe (102) des Regulierschiebers (84) angeordnet ist.

9. Kartusche nach irgendeinem der vorangehenden Patentansprüche, **dadurch gekennzeichnet, dass** sie ein Organ zur Erzeugung von Wirbeln (24) umfasst, das einem Wärmefühferteil (92) des Thermostatelements (82) gegenüber eine unregelmäßige innere Oberfläche aufweist.

10. Mischhahn einer Kartusche nach irgendeinem der vorangehenden Patentansprüche, **dadurch gekennzeichnet, dass** er einen Betätigungsgriff (54) zur Einstellung von Durchflussmenge und Temperatur des gemischten Fluids umfasst, der mit dem Betätigungshebel (50) der Kartusche (1) fest verbunden ist.

## Claims

1. Single-control thermostatic cartridge, of the type comprising a body (8), at the inner side of which there is provided a chamber (18) of mixed fluid; a disc (30) which is fixed relative to the body (8) and which is provided both with at least one inlet passage (34) and at least one return passage (36) for cold fluid, and at least one inlet passage (35) and at least one return passage (37) for hot fluid; a disc (40) which can be moved relative to the fixed disc (30) and which is provided with a cold fluid passage (44) which is suitable for placing in communication the cold fluid inlet passage and outlet passage of the fixed disc (30) and a hot fluid passage (45) which is suitable for placing in communication the hot fluid inlet passage (35) and return passage (37) of the fixed disc (30); thermostatic control means (80) comprising a sliding control member (84) which is arranged in the chamber (18) of mixed fluid, downstream of cold and hot fluid return passages (16, 17), and a thermostatic element (82) which is located at least partially inside the chamber (18) of mixed fluid and to which the sliding control member (84) is mechanically connected; and a single lever (50) for controlling the flow rate and the temperature of the mixed fluid, which lever is suitable both for driving the movable disc (40) in rotation and in translation relative to the fixed disc (30) and for moving the thermostatic element inside the chamber (18) of mixed fluid, **characterised in that** the cold fluid inlet passage (34) and return passage (36) of the fixed disc (30) extend approximately end-to-end in circumferential arcs having radii which are substantially equal, and **in that** the hot fluid inlet passage (35) and return passage (37) of the fixed disc (30) extend approximately end-to-end in circumferential arcs having substantially equal radii.

2. Cartridge according to claim 1, **characterised in that** the radii of the circumferential arcs for the cold fluid passages (34, 36) of the fixed disc (30) and the radii of the circumferential arcs for the hot fluid passages (35 and 37) of the fixed disc (30) are substantially equal.

3. Cartridge according to claim 1 or 2, **characterised in that** the fixed disc (30) comprises, for the same cold or hot fluid, a plurality of inlet passages (34, 35) which are separated from each other and/or a plurality of return passages (36, 37) which are separated from each other.

4. Cartridge according to claim 3, **characterised in that**, for the same cold or hot fluid, the inlet passage(s) (34, 35) and the return passage(s) (36, 37) form a succession of alternate passages.

5. Cartridge according to any one of the preceding claims, **characterised in that** it comprises a nut (52) for controlling the temperature of the mixed fluid, which nut is connected in terms of rotation to the control lever (50) and which comprises both an annular flange (68) which is in sliding planar contact with the movable disc (40) and a cylindrical body (62) on which the control lever is pivotably mounted.

6. Cartridge according to claim 5, **characterised in that** the thermostatic control means (80) comprise a screw (86) for controlling the temperature of the mixed fluid, which screw is fixed in terms of rotation relative to the body (8) and which is received in a substantially complementary threaded portion carried by the body (62) of the control nut (52), the thermostatic element (82) abutting against the screw (86).

7. Cartridge according to any one of the preceding claims, **characterised in that** an over-travel spring (110) is interposed between the sliding control member (84) and the thermostatic element (82) at the inner side of the chamber (18) of mixed fluid.

8. Cartridge according to claim 7, **characterised in that** the over-travel spring (110) is arranged radially at the inner side of an outer crown (102) of the sliding control member (84) .

9. Cartridge according to any one of the preceding claims, **characterised in that** it comprises a turbulence generating element (24) which has an inner surface of irregular form facing a heat-sensitive portion (92) of the thermostatic element (82).

10. Mixer tap for a cartridge according to any one of the preceding claims, **characterised in that** it comprises a handle (54) for controlling the flow rate and the temperature of the mixed fluid, which handle is fixedly joined to the control lever (50) of the cartridge (1).
